Europäisches Patentamt

European Patent Office

Office européen des brevets

(11) Veröffentlichungsnummer: **0 487 872 A1**

# EUROPÄISCHE PATENTANMELDUNG

(21) Anmeldenummer: **91117348.2**

(51) Int. Cl.⁵: **G01B 5/30**

(22) Anmeldetag: **11.10.91**

(30) Priorität: **26.11.90 CH 3739/90**

(43) Veröffentlichungstag der Anmeldung:
**03.06.92 Patentblatt 92/23**

(84) Benannte Vertragsstaaten:
**AT DE IT**

(71) Anmelder: **Kovari, Kalman, Prof. Dr.**
**Stettbachstrasse 6**
**CH-8702 Zollikon(CH)**
Anmelder: **Köppel, Jacob**
**Lärchenweg 5**
**CH-8116 Würenlos(CH)**

(72) Erfinder: **Kovari, Kalman, Prof.Dr.**
**Stettbachstrasse 6**
**CH-8702 Zollikon(CH)**

(74) Vertreter: **Patentanwälte Schaad, Balass &**
**Partner**
**Dufourstrasse 101 Postfach**
**CH-8034 Zürich(CH)**

(54) **Verfahren und Messanordnung zur Bestimmmung von Verschiebungen in einem festen Medium.**

(57) Zur Bestimmung von Verschiebungen in einem festen Medium, z.B. im Boden, im Fels, in Beton oder in Bauwerken sind in einem sich durch das Medium erstreckenden Messkanal (1) in regelmässigen Abständen Messstellen (4,5) vorgesehen, an denen nacheinander zwei Messanschläge (6,7) eines Messgestänges (8) in Messkontakt gebracht werden. Dabei gelangt zuerst ein auf dem Messgestänge (8) entgegen der Kraft einer Feder (22) verschiebbarer Messanschlag (6) an einer ersten Messstelle (4) in Kontakt mit einem Messgegenanschlag (2), ohne dass die Feder (22) zusammengedrückt wird, und die hierbei sich ergebende Axialposition des Messgestänges (8) wird durch einen Messwertgeber (11) an dem aus dem Messkanal (1) herausragenden Teil (33) des Messgestänges (8) ermittelt. Anschliessend wird das Messgestänge (8) entgegen der Kraft der Feder (22) weiter aus dem Messkanal (1) herausgezogen, bis ein zweiter Messanschlag (7) an der zweiten Messstelle (5) in Messkontakt gelangt, und die entsprechende Position wird ebenfalls an dem Teil (33) des Messgestänges (8) ermittelt. Der sich ergebende Weg (m) wird mit einem zu einer späteren Zeit auf gleiche Weise an denselben Messstellen (4,5) ermittelten Weg verglichen, und die dabei sich ergebende Differenz ist ein Mass für die zu bestimmende Verschiebung im festen Medium. Die Messanordnung hat einen einfachen Aufbau, vor allem weil sich im Messkanal (1) keine Messwertaufnehmer irgendwelcher Art befinden und in diesen auch keine solchen eingeführt werden.

Fig. 3

Die Erfindung betrifft ein Verfahren zur Bestimmung von Verschiebungen in einem festen Medium, insbesondere im Boden, im Fels, in Beton oder in Bauwerken, indem die Positionen von in einem durch dieses Medium geführten Messkanal angeordneten Messstellen in Zeitabständen mittels einer durch den Messkanal geführten Messsonde relativ zu einer Referenzstelle bestimmt werden, wobei als Messonde ein Messgestänge mit zwei Messanschlägen verwendet wird, die durch eine Dreh- und Axialbewegung an der jeweiligen Messtelle in Anschlagposition gebracht werden sowie eine Messanordnung zur Durchführung des Verfahrens.

Ein Verfahren dieser Art und eine Messanordnung zur Durchführung eines solchen Verfahrens sind durch die CH-A-636 698 (US-A-4,327,590) bekannt. Nach diesem Verfahren wird ein z.B. als Differentialtransformator ausgeführter Messwertgeber in den Messkanal eingeführt, der ein zur Grösse der axialen Bewegung proportionales elektrisches Messignal über eine Messleitung nach aussen leitet. Der Erfindung liegt die Aufgabe zugrunde, ein Verfahren der genannten Art zu finden, das mittels einer einfacheren und dabei weniger störanfälligen Messanordnung ebenfalls eine genaue Messung ermöglicht.

Zur Lösung der genannten Aufgabe wird erfindungsgemäss vorgeschlagen, dass der Messwertgeber ausserhalb des Messkanals angeordnet wird, so dass die Relativpositionen der Messtellen ausserhalb des Messkanals an dem aus dem Messkanal herausragenden Teil des Messgestänges ermittelt werden. Zur Durchführung dieses Verfahrens wird eine Messanordnung vorgeschlagen, mit einem im zu bestimmenden festen Medium sich erstreckenden Messkanal, in dem mehrere Messgegenanschlage bildende Messstellen mit Abstand hintereinander angeordnet sind und mit einem zur Einführung in den Messkanal bestimmten Messgestänge, an dem sich mindestens ein Messanschlag befindet, der durch eine Dreh- und Axialbewegung in Anschlagposition mit jeweils einem der Gegenanschläge bewegbar ist, wobei zur Bestimmung einer Positionsverschiebung der Messgegenanschläge ein Messwertgeber ausserhalb des Messkanals angeordnet ist, der die Position der Messstellen aufgrund der Verschiebepositionen des Messgestänges an dessen aus dem Messkanal herausragenden Teil oder einem an diesem befestigten Messkörper abtastet.

Somit ist es gemäss der Erfindung nicht erforderlich, den Messwertgeber bis zur Messstelle tief in den Messkanal, z.B. in ein Erdloch, einzuführen und das Messignal muss nicht bis zu einem ausserhalb angeordneten Anzeigegerät übertragen werden. Die Positionsveränderung einer Messtelle relativ zu einer zweiten Messstelle kann stattdessen mittels eines einfachen, handelsüblichen präzisen mechanischen oder elektronischen Messtasters ausserhalb des Messkanals bei günstigeren Messbedingungen erfolgen.

Die Genauigkeit der Messung, bzw. am Messgestänge aufgetretene Längenveränderungen können auf einfache Weise festgestellt werden, indem eine Eichmessung an einer im Messkanal vorgesehenen Eichstrecke durchgeführt wird.

Weitere vorteilhafte Ausführungsformen der Erfindung sind in den Patentansprüchen definiert und der folgenden Beschreibung anhand der Zeichnungen zu entnehmen. Es zeigt:

Fig.1 eine schematische Darstellung einer Messanordnung entsprechend einem Axialschnitt entlang des Anfangsbereiches des Messkanals, wobei die Messanschläge noch nicht in Anschlagposition sind,

Fig.2 eine Darstellung entsprechend Fig.1, jedoch mit einer ersten Messposition des Messgestänges, in der einer der Messanschläge in Anschlagposition ist,

Fig.3 eine Darstellung entsprechend Fig.1 mit einer zweiten Messposition des Messgestänges, in der beide Messanschläge in Anschlagposition sind,

Fig.4 ein Kraft-Wegdiagramm der für die Messung am Messgestänge auftretenden Kraft- und Wegänderungen,

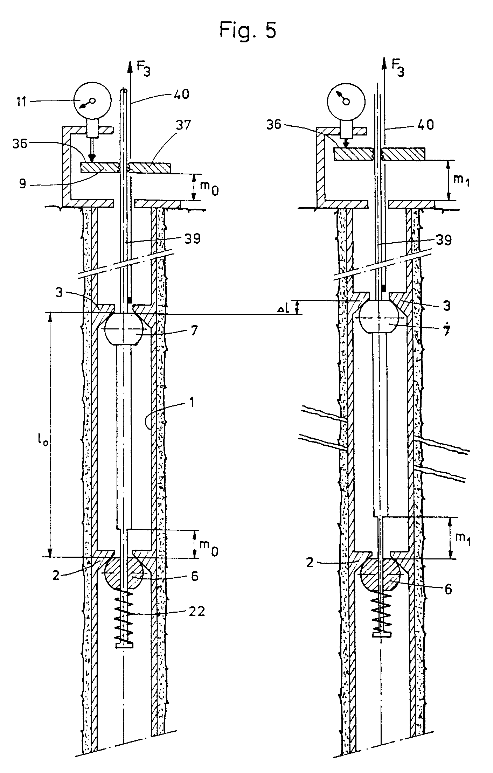

Fig.5 zwei einem zeitlichen Abstand entsprechende Darstellungen entsprechend Fig.3 zur Darstellung einer Längenänderung zwischen zwei Messtellen,

Fig.6a, Fig.6b schematische Darstellung von zwei Drehpositionen eines Messanschlages relativ zu einem Messgegenanschlag im Radialschnitt,

Fig.7 einen vergrösserten Axialschnitt durch den Messkanal im Bereich einer Messstelle, bei anliegendem Messanschlag und

Fig.8 einen Axialschnitt durch einen Bereich des Messkanals in dem eine Eichstrecke vorgesehen ist.

Die Messanordnung besteht im wesentlichen aus einem Messkanal 1 mit durch Messgegenanschläge 2,3 gebildeten Messtellen 4,5, einem zwei Messanschläge 6,7 aufweisenden Messgestänge 8, einem Messkörper 9 und einem an einer Konsole 10 gehaltenen Messwertgeber 11.

Die Messstellen 4,5 sind in regelmässigen Abständen im Messkanal 1 vorgesehen. Für die Bestimmung von Verschiebungen im Boden, im Fels oder in einem grösseren Bauwerk, wie z.B. einer Talsperre beträgt der Abstand zwischen den Messtellen beispielsweise 1 m, und es sind zahlreiche Messtellen 4,5 hintereinander angeordnet, so dass der auf Verschiebungen zu kontrollierende Bereich durch sie erfasst wird.

Damit die Verschiebungen des den Messkanal 1 umgebenden Mediums Positionsänderungen der Messtellen bewirken, sind sie relativ zur Wand einer für die Bildung des Messkanals 1 vorgesehenen, sich durch das Medium erstreckende Bohrung 12 fixiert. Für diese Fixierung sind verschiedene Methoden geignet, jedoch empfiehlt es sich, diese mittels eines Messrohres 13 vorzunehmen, an dessen Innenseite die Messgegenanschläge 3,4 befestigt sind. Die Anwendung eines Messrohres 13 erleichtert das Einbringen der Messgegenanschläge 3,4 in den sich beispielsweise über mehrere hundert Meter erstreckenden Messkanal 1. Damit die Verschiebungen dennoch die zu messenden Positionsveränderungen der Messgegenanschläge 3,4 bewirken, wird ein Messrohr 13 verwendet, das in axialer Richtung formveränderbar ist, und der schmale Zwischenraum zwischen der Wand des Bohrloches 12 und dem Messrohr 13 wird auszementiert. Ein Beispiel für die Montage eines Messrohres, das für axiale Formveränderungen teleskopartige Muffenverbindungen aufweist, ist in der EP-A-0 188 798 (US-A-4,739,652) beschrieben.

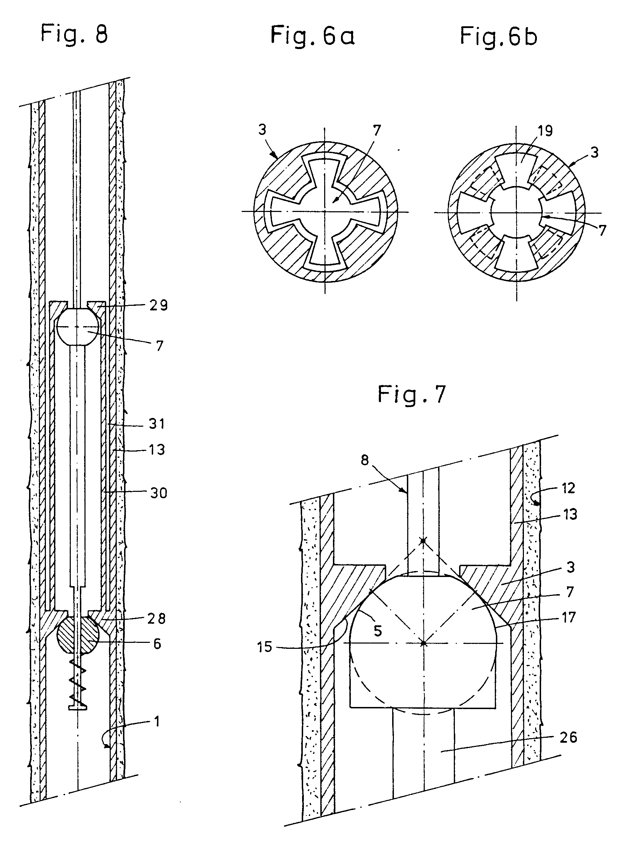

Die an dem Messgestänge 8 vorgesehenen beiden Messanschläge 6,7 ermöglichen mit den Messgegenanschlägen 2,3 des Messkanals 1 an der jeweiligen Messtelle 4,5 hinsichtlich der axialen Position einen genau definierten Kontakt entlang einer Kreislinie, indem die Gegenanschlagfläche 14,15 der Messgegenanschläge 2,3 eine Kegelfläche bildet, während die Messanschläge 6,7 des Messgestänges 8 eine als Teil einer Kugelfläche ausgebildete Anschlagfläche 16,17 aufweisen, wie in Fig.7 am deutlichsten dargestellt ist. In Schnittdarstellung radial zur Achse des Messgestänges 8 entsprechend Fig.6a,6b sind eine kreuzförmige Ausführung des dargestellten Messanschlages 7 und entsprechende kreuzförmige Aussparungen 19 am Messgegenanschlag 3 zu sehen, so dass der Messanschlag 7 beim axialen Verschieben des Messgestänges 8 den Messgegenanschlag passieren kann, um durch eine anschliessende kurze Gegenbewegung mit diesem in die dargestellte Anschlagposition zu gelangen. Diese Ausbildung der Anschlag- und Gegenanschlagflächen ist durch die CH-A-636 698 (US-PS-4,327,590) bekannt.

Von den beiden Messanschlägen 6,7 ist der im Bereich des Endes 20 des Messgestänges 8 vorgesehene Messanschlag 6 als Gleitkörper auf einem verjüngten Stangenteil 21 verschiebbar geführt. Eine diesen Stangenteil 21 umschliessende Schraubenfeder 22 stützt sich einerseits an dem Messanschlag 6 und anderseits an einem verbreiterten äusseren Endteil 23 ab, so dass der Messanschlag 6 durch den Druck der Schraubenfeder 22 fest an dem die Begrenzung des verjüngten Stangenteils 21 bildenden Absatz 25 anliegt und somit exakt positioniert ist. Der andere Messanschlag 7 ist starr an dem Messgestänge 8 befestigt.

Der Stangenteil 26, der sich zwischen den beiden Messanschlägen 6,7 erstreckt, wirkt zwischen ihnen als Distanzelement, dessen Massgenauigkeit die Messgenauigkeit der Messanordnung wesentlich beeinflusst. Er hat deshalb gegenüber dem sich anschliessenden übrigen, lediglich dem Verschieben dienenden Messgestänge einen grösseren Durchmesser. Da die Messung der Distanz zwischen zwei Messtellen 5,6 bei zusammengedrückter Schraubenfeder 22 erfolgen soll, wie im folgenden noch näher beschrieben wird, ist die Länge des Stangenteils 26 so gewählt, dass der Abstand zwischen den Messanschlägen 6,7 bei nicht zusammengedrückter Schraubenfeder 22 kleiner ist als der Abstand zwischen zwei Messtellen 4,5.

Die Genauigkeit der Messanordnung und insbesondere die Massgenauigkeit des durch den Stangenteil 26 vorgegebenen Abstandes zwischen den Messanschlägen 6,7 wird vorzugsweise durch eine Referenzmessung an einer z.B. im Messkanal 8 angeordneten Eichstrecke zwischen zwei Messgegen-bzw. Eichgegenanschlägen 28,29 überprüft, so dass die dabei vorliegenden Temperaturbedingungen denjenigen der für die Bestimmung von Verschiebungen im festen Medium vorzunehmenden realen Messungen entsprechen. Wie Fig.8 zeigt, ist die Eichstrecke durch ein von der Axialverformung des Messrohres 13 unabhängiges Verbindungsrohr 30 zwischen den Eichgegenanschlägen 28,30 gebildet, indem dieses von einem der Eichgegenanschläge 28 frei in Richtung des Messkanals 1 absteht, so dass gegenüber dem Messrohr 13 ein gleichmässig verlaufender Spalt 31 vorhanden ist.

Der Messwertgeber 11 befindet sich ausserhalb des Messkanals 1 in der Nähe des aus dem Messkanal 1 herausragenden Teiles 33 des Messgestänges 8. Er besteht beispielsweise aus einer Messuhr mit einem Taststift 34, dessen Auslenkbereich dem maximalen Verschiebeweg des Messanschlages 6 auf dem verjüngten Stangenteil 21 entspricht. Anstatt eines mechanischen Messwertgebers kann jedoch auch ein berührungslos wirkender elektronischer Messensor verwendet werden. Der Messwertgeber 11 wird von einer Konsole 10 gehalten, die relativ zu dem Ende des Messrohres 13 fixiert ist oder an einem nicht dargestellten, am festen Medium fixierten Referenzblock befestigt ist. Die Messung erfolgt an einer Referenzfläche 36 eines Messkörper 9, der mittels eines Klemmkörpers 37 an dem Teil 33 des Messgestänges befestigbar ist.

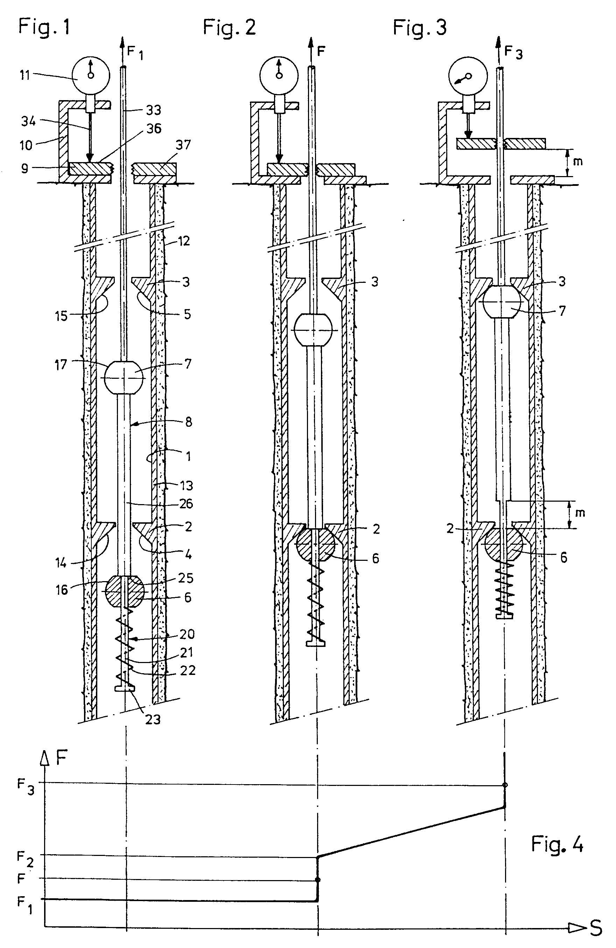

Für die in grösseren Zeitabständen erfolgende Bestimmung von Verschiebungen in einem festen Medium, z.B. um Gebirgsbewegungen festzustellen, wird in den fest eingebauten Messkanal 1 das Messgestänge 8 als Sonde entsprechend dem Fortschritt der Messung von einer Messstelle 4,5 zur anderen bewegt, bis sämtliche Messstellen 4,5 oder in einem bestimmten, interessierenden Bereich angeordnete Messstellen 4,5 durch die Messanschläge 6,7 erfasst worden sind. Dabei wird für jede Messung nach Durchschieben des verschiebbar gehaltenen vorderen Messanschlages 6 durch einen Messgegenanschlag 2 das Messgestänge 8 um $45^\circ$ verdreht, so dass die Messanschläge 6,7 aus der das Durchschieben ermöglichenden Drehposition nach Fig.6a in die einen Anschlag ermöglichende Drehposition nach Fig.6b verdreht wird. Anschliessend wird das Messgestänge 8 unter Aufwendung einer Kraft $F_1$ so weit zurückgezogen, bis dieser Messanschlag 6 entsprechend Fig.2 an dem Messgegenanschlag 2 in Anschlagposition gelangt. Dieser Moment wird durch das plötzliche Ansteigen der aufgewandten Zugkraft $F_1$ auf den Wert F angezeigt, wie das Kraft-Wegdiagramm der Fig.4 veranschaulicht. Die Zugkraft an dem Messgestänge 8 wird aufrechterhalten, so dass der Messanschlag 6 für eine erste Messung sicher am Messgegenanschlag 2 in Messkontakt bleibt. Sie ist nur so gross, dass dabei die Schraubenfeder 22 nicht zusammengedrückt wird, bzw. ihre Kraft $F_2$ nicht überwunden wird. Während dieses Messkontaktes wird der Messkörper 9 mittels des Klemmkörpers 37 an dem aus dem Messkanal 1 herausragenden Teil 33 des Messgestänges 8 fest angeklemmt und der Messwertgeber 11 zur Messung einer Messausgangsposition mit der Referenzfläche 36 in Messkontakt gebracht. Nach Ablesung des Messwertes oder Einstellung des Messwertgebers 11 auf seine Nullposition wird die Zugkraft an dem Messgestänge 8 über den Wert $F_2$ erhöht, so dass die Schraubenfeder 22 zusammengedrückt wird und der andere Messanschlag 7 entsprechend Fig.3 Messkontakt an dem ihm benachbarten Messgegenanschlag 3 findet. Dies zeigt sich ebenfalls durch einen plötzlichen Anstieg der Zugkraft an. In diesem zweiten Moment wird bei einer Zugkraft $F_3$ der Messwertgeber 11 nochmals abgelesen und die Differenz "m" zum vorherigen Messwert errechnet. Dabei wird die Zugkraft $F_3$, bei der

die Ablesung erfolgt, so gewählt, dass die Kraft $F_2$ der Schraubenfeder 22 sicher überwunden ist, jedoch noch keine Deformation erfolgt. Somit wird für jede der zahlreichen aufeinanderfolgenden Distanzen zwischen zwei Messgegenanschlägen 2,3 das Paar von Messanschlägen 6,7 mit diesen zum Anschlag gebracht und die dabei erforderliche Verschiebung "$m_o$" des Messanschlages 6 bestimmt. Nach einem bestimmten Zeitraum, in dem eine Schiebeveränderung in dem das Messrohr umgebenden festen Medium, z.B. aufgrund geologischer Bedingungen, Belastungen u.s.w. zu erwarten ist, wird die Messung wiederholt und ein entsprechender Wert "$m_1$" bestimmt, der zur Bestimmung einer Differenz $m_1 - m_o$ dem zum früheren Zeitpunkt zwischen den gleichen Messgegenanschlägen ermittelt Wert $m_o$ zugeordnet wird. Die genannte Differenz entspricht der durch Verschiebungen im umgebenden festen Medium aufgetretenen Distanzänderung zwischen jeweils zwei Messstellen 4,5.

Es versteht sich, dass die Messablesungen und Differenzbildungen automatisch mittels eines Datenverarbeitungsgerätes erfolgen können. Auch für das Aufbringen und die Ueberwachung der für die Herstellung der Messkontakte erforderlichen Zugkräfte an dem Messgestänge kann eine automatisch arbeitende Vorrichtung vorgesehen sein.

Da für eine Erfassung von zahlreichen, über eine grössere Distanz von z.B. mehreren hundert Metern angeordneten Messstellen 4,5 eine entsprechende Länge des Messgestänges 8 erforderlich ist, das stückweise über nichtdargestellte Muffenverbindungen zusammengesetzt wird, würde die aufzubringende Zugkraft zu einer die Messgenauigkeit verfälschenden Längenveränderung des Messgestänges 8 führen. Dieser Nachteil wird vermieden, indem parallel zu dem von den Messanschlägen 6,7 wegführenden Teil 39 des Messgestänges 8 ein an diesem befestigtes Zugseil 40 vorgesehen ist, über das die für die Messkontakte erforderliche Zugkraft aufgebracht wird.

Das vorstehend beschriebene Messgestänge hat den besonderen Vorteil, dass es selber keine Messwertaufnahmeglieder (Sensoren) irgendwelcher Art für die Messungen enthält. Letztere erfolgen wie beschrieben durch ausserhalb des Messkanals 1 angeordnete Mittel.

**Patentansprüche**

1. Verfahren zur Bestimmung von Verschiebungen in einem festen Medium, insbesondere im Boden, im Fels, in Beton oder in Bauwerken, indem die Positionen von in einem durch dieses Medium geführten Messkanal (1) angeordneten Messstellen (4,5) in Zeitabständen mittels einer durch den Messkanal (1) geführten Messonde relativ zu einer Referenzstelle bestimmt werden, wobei als Messonde ein Messgestänge (8) mit zwei Messanschlägen (6,7) verwendet wird, die durch eine Dreh- und Axialbewegung an der jeweiligen Messtelle (4,5) in Anschlagposition gebracht werden, dadurch gekennzeichnet, dass ein ausserhalb des Messkanals (1) angeordneter Messwertgeber (11) verwendet wird, so dass die Positionen jeweils einer Messstelle (4,5) zu irgendeiner anderen Messstelle ausserhalb des Messkanals (1) an dem aus dem Messkanal (1) herausragenden Teil (33) des Messgestänges ermittelt werden.

2. Verfahren nach Anspruch 2, dadurch gekennzeichnet, dass die Position einer Messstelle (5) relativ zu einer benachbarten Messstelle (4) mittels zweier in vorgegebenem Abstand voneinander an dem Messgestänge (8) vorgesehener Messanschläge (6,7) erfolgt, von denen einer (6) von einem Anschlag (25) an dem Messgestänge (8) weg entgegen der Kraft einer Feder (22) axial verschiebbar ist, während der andere (7) mit dem Messgestänge (8) fest verbunden ist, wobei zuerst die Anschlagposition des axial verschiebbaren Messanschlages (6) an dem herausragenden Teil (33) des Messgestänges (8) gemessen wird, anschliessend durch Ueberwindung der Federkraft das Messgestänge (8) soweit aus dem Messkanal (1) herausgezogen wird, bis der zweite Messanschlag (7) an der benachbarten Messstelle (5) in Anschlagposition gelangt und dessen Anschlagposition an dem herausragenden Teil (33) des Messgestänges (8) gemessen wird.

3. Verfahren nach Anspruch 2, dadurch gekennzeichnet, dass das Messgestänge (8) durch ein Zugseil (40) in Messposition der Messanschläge (6,7 gezogen wird, das in der Nähe des fest mit gestänge (8) oder an diesem Messanschlag (7) befestigt ist .

4. Verfahren nach Anspruch 2, gekennzeichnet, dass nach Messkontakt des beweglich gehaltenen Messanschlags (6) an einer Messstelle (4) an dem aus dem Messkanal (1) herausragenden Gestängeteil (33) ein Messkörper (9) lösbar befestigt wird, anschliessend ein Messinstrument (11) zu diesem in Funktion gebracht wird, so dass es den Weg misst, um den das Messgestänge (8) aus dem Messkanal (1) herausgezogen wird, bis entgegen der Federkraft der am Messgestänge (8) starr befestigte Messanschlag (7) an einer Messtelle (5) zum Anschlag gelangt.

5. Verfahren nach einem der Ansprüche 1 bis 4, dadurch gekennzeichnet, dass vor der Bestimmung von Verschiebungen im festen Medium an einer im oder ausserhalb des Messkanals (1) vorgesehenen Eichstrecke zwischen zwei Messstellen eine Eichmessung durchgeführt wird.

6. Messanordnung zur Durchführung des Verfahrens nach Anspruch 1, mit einem im zu bestimmenden festen Medium sich erstreckenden Messkanal (1), in dem mehrere Messstellen (4,5) bildende Messgegenanschläge (2,3 mit Abstand hintereinander angeordnet sind und mit einem zur Einführung in den Messkanal (1) bestimmten Messgestänge (8), an dem sich zwei ein Messanschläge (6,7) befinden, die durch eine Dreh- und Axialbewegung in Messkontakt mit jeweils einem der Gegenanschläge (2,3) bewegbar sind, dadurch gekennzeichnet, dass zur Bestimmung einer Positionsverschiebung der Messstellen (4,5) ein Messwertgeber (11) ausserhalb des Messkanals (1) angeordnet ist, der die Position der Messstellen (4,5) aufgrund der Verschiebepositionen des Messgestänges (8) an dessen aus dem Messkanal (1) herausragenden Teil (33) oder einem an diesem befestigten Messkörper (9) abtastet.

7. Messanordnung nach Anspruch 6, dadurch gekennzeichnet, dass am Messgestänges (8) mit Abstand hintereinander zwei Messanschläge (6,7) vorgesehen sind, von denen einer (7) mit dem Messgestänge (8) starr verbunden ist und der andere, auf der Messstange (26) axial verschiebbar, durch die Kraft einer Feder (22) an einem Anschlag (25) der Messstange (26) anliegt.

8. Messanordnung nach Anspruch 6, dadurch gekennzeichnet, dass in dem Messkanal (1) zwischen zwei im Abstand zueinander fixierten Eichgegenanschlägen (28,29) eine Eichstrecke für die Eichung der Messanordnung vorgesehen ist.

9. Messanordnung nach Anspruch 8, dadurch gekennzeichnet, dass die zwei Eichgegenanschläge (28,29) durch ein Verbindungsrohr (30) zueinander fixiert sind, das entlang seiner gesamten Umfangsfläche von dem Messkanal (1) durch einen Spalt (31) distanziert ist.

10. Messanordnung nach Anspruch 6 oder 7, dadurch gekennzeichnet, dass ausserhalb des Messkanals (1) an dem Messgestänge (8) ein Messkörper (9) angeordnet ist, der Mittel (37) aufweist, um ihn für die Messung wahlweise an dem Messgestänge (8,33) zu fixieren, wobei sich an dem Messkörper (9) eine Referenzfläche (36) befindet und der Messwertgeber (11) zur Abtastung dieser Referenzfläche (36) angeordnet ist.

11. Messanordnung nach Anspruch 6, dadurch gekennzeichnet, dass sich parallel zu dem Messgestänge (8) ein Zugseil (40) erstreckt, das an dem starr mit dem Messgestänge (8) verbundenen Messanschlag (7) oder in dessen Nähe am Messgestänge (8) befestigt ist.

Fig. 1

Fig. 2

Fig. 3

Fig. 4

## Fig. 5

Fig. 8

Fig. 6a

Fig. 6b

Fig. 7

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | EP-A-0 188 798 (GESELLSCHAFT ZUR FÖRDERUNG DER INDUSTRIEORIENTIERTEN FORSCHUNG) | | G01B5/30 |
| | --- | | |
| D,A | DE-A-2 920 886 (GESELLSCHAFT ZUR FÖRDERUNG DER INDUSTRIEORIENTIERTEN FORSCHUNG) | | |
| | ----- | | |

**RECHERCHIERTE SACHGEBIETE (Int. Cl.5 )**

G01B
E21B
E21F

Der vorliegende Recherchenbericht wurde für alle Patentansprüche erstellt

| Recherchenort | Abschlußdatum der Recherche | Prüfer |
|---|---|---|
| DEN HAAG | 10 MAERZ 1992 | BATTESON A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P0403)